# EUROPEAN PATENT APPLICATION

(11) **EP 4 614 851 A1**
(43) Date of publication of application: **10.09.2025**
(21) Application number: 22963796.2
(22) Date of filing: 31.10.2022
(51) Int. Cl.: H04L 5/00, H04B 7/0413, H04W 72/04

(54) **METHOD AND APPARATUS FOR INDICATING INFORMATION OF ANTENNA PORT, COMMUNICATION DEVICE, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Stöckeler, Ferdinand
(86) International application number: PCT/CN2022/128827
(87) International publication number: WO 2024/092477

(57) **Abstract**

Embodiments of the present invention provide a method for indicating information of a demodulation reference signal (DMRS) port. The method is executed by an access network device. The method comprises: sending indication information to a terminal, wherein the indication information is used for indicating information of a DMRS port of a second-type DMRS. Here, since the indication information indicates the information of the DMRS port of the second-type DMRS, after receiving the indication information, the terminal can determine the DMRS port according to the information of the DMRS port of the second-type DMRS indicated by the indication information; and compared with the case where only a DMRS port of a first-type DMRS can be determined, when the DMRS port of the second-type DMRS is present, the terminal can clearly determine DMRS ports of different antenna signal types, and perform communications using corresponding DMRS ports, thereby achieving higher adaptability, and making wireless transmission based on DMRS ports more reliable.

## Description

### FIELD

The present invention relates to, but is not limited to, the technical field of wireless communication technologies, and more particularly to a method and apparatus for indicating information of an antenna port, a communication device, and a storage medium.

### BACKGROUND

In the related technology, for multiple transmission reception points (mTRPs), the network may support coherent joint transmission (CJT), and the CJT supports multiple users to be jointly scheduled, and supports multi-user multi-input multi-output (MU-MIMO). Compared with non-coherent joint transmission (NC-JT), the CJT has a larger system gain. In the related technology, the MU-MIMO supports multiple demodulation reference signal (DMRS) ports, and the network needs to inform the user of information of a DMRS port to be used.

### SUMMARY

Embodiments of the present invention provide a method and apparatus for indicating information of a demodulation reference signal (DMRS) port, a communication device, and a storage medium.

According to a first aspect of the present invention, a method for indicating information of a DMRS port is provided. The method is performed by an access network device, and includes: sending indication information to a terminal. The indication information indicates information of a DMRS port of a second-type DMRS.

According to a second aspect of the present invention, a method for indicating information of a DMRS port is provided. The method is performed by a terminal, and includes: receiving indication information sent from an access network device. The indication information indicates information of a DMRS port of a second-type DMRS.

According to a third aspect of the present invention, an apparatus for indicating information of a DMRS port is provided. The apparatus includes: a sending module configured to send indication information to a terminal. The indication information indicates information of a DMRS port of a second-type DMRS.

According to a fourth aspect of the present invention, an apparatus for indicating information of a DMRS port is provided. The apparatus includes: a receiving module configured to receive indication information sent from an access network device. The indication information indicates information of a DMRS port of a second-type DMRS.

According to a fifth aspect of the present invention, a communication device is provided, including: a processor; and a memory for storing processor-executable instructions. The processor is configured to run the executable instructions to perform the method according to any embodiment of the present invention.

According to a sixth aspect of the present invention, there is provided a computer storage medium having stored therein a computer-executable program that, when executed by a processor, causes the method according to any embodiment of the present invention to be implemented.

In the embodiments of the present invention, the indication information is sent to the terminal. The indication information indicates the information of the DMRS port of the second-type DMRS. Herein, since the indication information indicates the information of the DMRS port of the second-type DMRS, after receiving the indication information, the terminal can determine the DMRS port according to the information of the DMRS port of the second-type DMRS indicated by the indication information. Compared with the case where only the DMRS port of the first-type DMRS is determined, the DMRS port of the second-type DMRS further exists, the terminal of the present invention is able to clearly determine the DMRS ports of different types of antenna signals and utilize the corresponding DMRS port for communication. In this way, the adaptability is improved, and wireless transmission based on the DMRS port(s) are more reliable.

### BRIEF DESCRIPTION OF THE DRAWINGS

FIG. 1 is a schematic diagram of a wireless communication system according to an illustrative embodiment.
FIG. 2 is a flowchart of a method for indicating information of an antenna port according to an illustrative embodiment.
FIG. 3 is a flowchart of a method for indicating information of a DMRS port according to an illustrative embodiment.
FIG. 4 is a flowchart of a method for indicating information of a DMRS port according to an illustrative embodiment.
FIG. 5 is a flowchart of a method for indicating information of a DMRS port according to an illustrative embodiment.
FIG. 6 is a flowchart of a method for indicating information of a DMRS port according to an illustrative embodiment.
FIG. 7 is a flowchart of a method for indicating information of a DMRS port according to an illustrative embodiment.
FIG. 8 is a flowchart of a method for indicating information of a DMRS port according to an illustrative embodiment.
FIG. 9 is a flowchart of a method for indicating information of a DMRS port according to an illustrative embodiment.
FIG. 10 is a flowchart of a method for indicating information of a DMRS port according to an illustrative embodiment.
FIG. 11 is a flowchart of a method for indicating information of a DMRS port according to an illustrative embodiment.
FIG. 12 is a flowchart of a method for indicating information of a DMRS port according to an illustrative embodiment.
FIG. 13 is a flowchart of a method for indicating information of a DMRS port according to an illustrative embodiment.
FIG. 14 is a flowchart of a method for indicating information of a DMRS port according to an illustrative embodiment.
FIG. 15 is a block diagram of an apparatus for indicating information of a DMRS port according to an illustrative embodiment.
FIG. 16 is a block diagram of an apparatus for indicating information of a DMRS port according to an illustrative embodiment.
FIG. 17 is a block diagram of a terminal according to an illustrative embodiment.
FIG. 18 is a block diagram of a base station according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. They are merely examples of apparatuses and methods consistent with some aspects of the present invention as recited in the appended claims.

Terms used in the embodiments of the present invention are only for the purpose of describing specific embodiments, and shall not be construed to limit the present invention. As used in the embodiments of the present invention and the appended claims, "a/an" and "the" in a singular form are intended to include plural forms, unless clearly indicated in the context otherwise. It should be understood that the term "and/or" used herein represents and contains any one of associated listed items and all possible combinations of more than one associated listed items.

It should be understood that terms such as "first," "second" and "third" may be used in the embodiments of the present invention for describing various information, these information should not be limited by these terms. These terms are only used for distinguishing information of the same type from others. For example, first information may also be referred to as second information, and similarly, the second information may also be referred to as the first information, without departing from the scope of the embodiments of the present invention. As used herein, the term "if" may be construed to mean "when" or "upon" or "in response to determining" depending on the context.

For purposes of conciseness and ease of understanding, terms "greater than" and "less than" are used herein in characterizing size relationships. It may be understood for a person skilled in the art that the term "greater than" covers a meaning of "greater than or equal to", and the term "less than" covers a meaning of "less than or equal to".

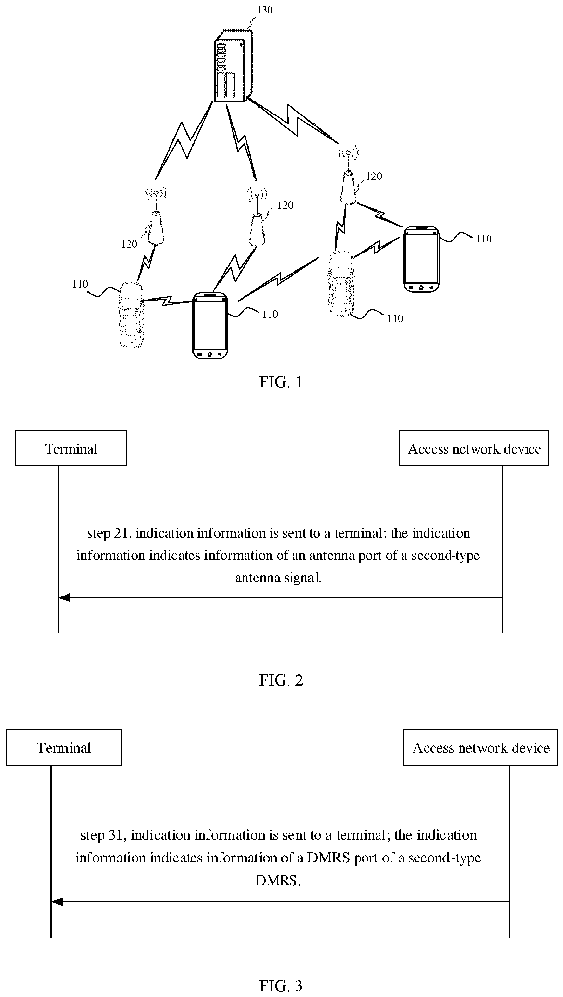

Referring to FIG. 1, a schematic diagram of a wireless communication system according to an illustrative embodiment, as shown in FIG. 1, the wireless communication system is a communication system based on mobile communication technology, and the wireless communication system may include several user equipment (UEs) 110 and several base stations 120.

UE 110 may be a device that provides voice and/or data connectivity to a user. The UE 110 can communicate with one or more core networks via a radio access network (RAN), and the UE 110 may be an Internet of Things (IoT) UE, such as a sensor device, a mobile phone and a computer including an IoT UE. For example, the UE 110 may be a fixed device, a portable device, a pocket device, a hand-held device, a computer built-in device or a vehicle-mounted device. For example, the UE 110 may be a station (STA), a subscriber unit, a subscriber station, a mobile station, a mobile, a remote station, an access point, a remote terminal, an access terminal, a user terminal, a user agent, a user device, or a user equipment. Alternatively, the UE 110 may also be a device of an unmanned aerial vehicle. Alternatively, the UE 110 may also be a vehicle-mounted device, for example, it may be a trip computer with a wireless communication function, or a wireless communication device connected externally to the trip computer. Alternatively, the UE 110 may also be a roadside device, for example, it may be a street lamp, a signal lamp, or other roadside devices with a wireless communication function.

The base station 120 may be a network device in the wireless communication system. The wireless communication system may be the 4th generation (4G) mobile communication system, also known as a long term evolution (LTE) system, or the wireless communication system may be a 5G system, also called a new radio (NR) system or 5G NR system. Alternatively, the wireless communication system may be a next-generation system of the 5G system. An access network in the 5G system is called new generation-radio access network (NG-RAN).

The base station 120 may be an evolved node B (eNB) in a 4G system. Alternatively, the base station 120 may be a next-generation node B (gNB) adopting a centralized and distributed architecture in the 5G system. When the base station 120 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a media access control (MAC) layer. The distributed unit is provided with a physical (PHY) layer protocol stack. The specific implementation of the base station 120 is not limited in the embodiments of the present invention.

A wireless connection can be established between the base station 120 and the UE 110 through a wireless radio interface. In different embodiments, the wireless radio interface is a wireless radio interface based on the fourth generation (4G) mobile communication network technology standard; or the wireless radio interface is a wireless radio interface based on the fifth generation (5G) mobile communication network technology standard, such as a new radio interface; or the wireless radio interface is a wireless radio interface based on a next-generation (from 5G) mobile communication network technology standard.

In some embodiments, an end-to-end (E2E) connection is established between the UEs 110, for example, vehicle to everything (V2X) communication, such as vehicle to vehicle (V2V) communication, vehicle to infrastructure (V2I) communication and vehicle to pedestrian (V2P) communication.

Here, the UE described above may be a terminal in the embodiments described below.

In some embodiments, the above wireless communication system may further include a network management device 130.

Several base stations 120 are respectively connected to the network management device 130. The network management device 130 may be a core network device in the wireless communication system, for example, the network management device 130 may be a mobility management entity (MME) in an evolved packet core (EPC) network. Alternatively, the network management device may be other core network devices, such as a serving gateway (SGW), a public data network gateway (PGW), a policy and charging rule function (PCRF) unit or a home subscriber server (HSS), etc. The implementation form of the network management device 130 is not limited in the embodiments of the present invention.

In order to facilitate understanding for those skilled in the art, multiple implementations are provided to clearly describe the technical solution of the embodiments of the present invention. Those skilled in the art can understand that the multiple implementations provided for the embodiments of the present invention may be executed alone or in combination with the methods of other embodiments of the present invention. The embodiments executed alone or in combination may further be executed together with some methods of other related technologies, which are not limited in the embodiments of the present invention.

In order to better understand the embodiments of the present invention, the following describes relevant scenarios of mTRP.

In a scenario embodiment, MU-MIMO supports at most 12 orthogonal DMRS ports. Since the MU-MIMO will support more UEs when the CJT is considered, the CJT needs to support more orthogonal DMRS ports.

In an embodiment, DMRS port information of a physical downlink shared channel (PDSCH) scheduled by downlink control information (DCI) format 1-1 or format 1-2 is indicated by an antenna port indication field of the DCI. Corresponding relationship between a value of the indication field and the DMRS port information is predefined. In an embodiment, the corresponding relationship between the value of the indication field and the DMRS port when dmrs-Type=1 and maxLength=1 is shown in Table 1.

**Table 1**

| **One Codeword: Codeword 0 enabled, Codeword 1 disabled** | | |
|---|---|---|
| **Indication value** | **Number of DMRS code division multiplexing (CDM) groups without data** | **DMRS port(s)** |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12-15 | Reserved | Reserved |

It may be understood that each element in Table 1 exists independently. These elements are listed in the table as an example, but it does not mean that all elements in the table must exist simultaneously as shown in this table. A value of an element is independent of a value of any other element in Table 1. Therefore, it can be understood by those skilled in the art that the value of each element in Table 1 is an independent example. In addition, any combination of a row, a column, or multiple element values of the table can be used as an independent example.

It should be noted that the corresponding relationship between the value of the port indication field and the DMRS port information in DCI format 1-1 or DCI format 1-2 is not applicable to UEs using newly introduced DMRS. For example, in the related art, in the protocol where dmrs-Type=1 and maxLength=1, there are 4 DMRS ports at most, while a numeric count of newly introduced DMRS ports are 8, so that when the DMRS mode is adopted, the corresponding relationship in this table cannot be used to indicate port(s) for the UE.

In addition to the situations mentioned in the above scenario embodiment, in other scenarios, the legacy corresponding relationship may not be enough to indicate a required port. The technical solution involved in the present invention is not limited to the DMRS scenario, but can also be applied to all scenarios having the above situation(s).

As shown in FIG. 2, a method for indicating information of an antenna port is provided in embodiments. The method is performed by an access network device, and the method includes the following step.

In step 21, indication information is sent to a terminal.

The indication information indicates information of an antenna port of a second-type antenna signal.

Herein, the terminal involved in the present invention may be, but is not limited to, a mobile phone, a wearable device, a vehicle-mounted terminal, a road side unit (RSU), a smart home terminal, an industrial sensor device and/or a medical device. In some embodiments, the terminal may be a Redcap terminal or a predetermined version of a new radio (NR) terminal (for example, an R17 NR terminal).

The access network device involved in the present invention may be a base station, which may be of various types, for example, a base station of a third generation (3G) mobile communication network, a base station of a fourth generation (4G) mobile communication network, a base station of a fifth generation (5G) mobile communication network, or other evolved base stations.

In an embodiment, the indication information is sent to the terminal. The indication information indicates information of an antenna port of a second-type antenna signal for CJT.

In an embodiment, the indication information is sent to the terminal via a high-layer signaling. The indication information indicates information of an antenna port of a second-type antenna signal. The high-layer signaling may be a radio resource control (RRC) signaling or a media access control (MAC) control element (CE) signaling.

In an embodiment, the indication information is sent to the terminal via DCI. The indication information indicates information of an antenna port of a second-type antenna signal.

In an embodiment, the indication information is sent to the terminal. The indication information indicates the information of the antenna port of the second-type antenna signal, and a numeric count of antenna ports supported by the second-type antenna signal is greater than a numeric count of antenna ports supported by a first-type antenna signal.

In an embodiment, the indication information is sent to the terminal. The indication information includes first indication information and second indication information. The first indication information includes a first indication identifier. The second indication information includes a second indication identifier. The first indication identifier indicates a first relationship of a preset corresponding relationship, and the second indication identifier indicates an antenna port of the second-type antenna signal determined by the first relationship. The first relationship is one item of the preset corresponding relationship. The preset relationship includes a relationship between an indication identifier and an antenna port, and each indication identifier corresponds to an antenna port. A numeric count of antenna ports supported by the second-type antenna signal is greater than a numeric count of antenna ports supported by a first-type antenna signal.

In an embodiment, a numeric count of DMRS ports supported by the second-type DMRS is N times a numeric count of DMRS ports supported by the first-type DMRS, where N is a real number greater than 1. For example, N=2, that is, the second-type DMRS supports twice the numeric count of DMRS ports supported by the first-type DMRS, and thus is an enhancement on the numeric count of DMRS ports supported by the first-type DMRS.

In an embodiment, the indication information is sent to the terminal. The indication information includes first indication information and second indication information. The first indication information includes a first indication identifier. The second indication information includes a second indication identifier. The first indication identifier indicates a first relationship of a preset corresponding relationship, and the second indication identifier indicates an offset. The offset is configured to instruct the terminal to determine the information of the antenna port of the second-type antenna signal according to the antenna port in the first relationship corresponding to the first indication identifier and the offset. The first relationship is one item of the preset corresponding relationship. The preset relationship includes a relationship between an indication identifier and an antenna port, and each indication identifier corresponds to an antenna port. A numeric count of antenna ports supported by the second-type antenna signal is greater than a numeric count of antenna ports supported by a first-type antenna signal.

In an embodiment, the indication information is sent to the terminal. The indication information includes first indication information and second indication information. The first indication information includes a first indication identifier. The second indication information includes a second indication identifier. The first indication identifier indicates a first relationship of a preset corresponding relationship, and the second indication identifier is an offset. The offset is configured to instruct the terminal to determine the information of the antenna port of the second-type antenna signal according to the antenna port in the first relationship corresponding to the first indication identifier and the offset. The first relationship is one item of the preset corresponding relationship. The preset relationship includes a relationship between an indication identifier and an antenna port, and each indication identifier corresponds to an antenna port. A numeric count of antenna ports supported by the second-type antenna signal is greater than a numeric count of antenna ports supported by a first-type antenna signal. The first relationship indicates one or more antenna ports of the first-type antenna signal.

In an embodiment, the indication information is sent to the terminal. The indication information includes first indication information and second indication information. The first indication information includes a first indication identifier. The second indication information includes a second indication identifier. The first indication identifier indicates a first relationship of a preset corresponding relationship, and the second indication identifier indicates an offset. The offset is configured to instruct the terminal to determine the information of the antenna port of the second-type antenna signal according to the antenna port in the first relationship corresponding to the first indication identifier and the offset. The first relationship is one item of the preset corresponding relationship. The preset relationship includes a relationship between an indication identifier and an antenna port, and each indication identifier corresponds to an antenna port. A numeric count of antenna ports supported by the second-type antenna signal is greater than a numeric count of antenna ports supported by a first-type antenna signal. The first relationship indicates one or more antenna ports. The second indication identifier is a first offset, and the first offset is configured to instruct the terminal to determine the antenna port of the second-type antenna signal according to the antenna port in the first relationship corresponding to the first indication identifier and the first offset; and/or the second indication identifier is a second offset, and the second offset is configured to instruct the terminal to determine the antenna port of the second-type antenna signal according to the antenna port in the first relationship corresponding to the first indication identifier and the second offset.

In an embodiment, the first indication information and the second indication information are carried in the same signaling, and the signaling includes the first indication identifier and the second indication identifier.

In an embodiment, the first indication information and the second indication information are carried in different signalings, and the first indication identifier and the second indication identifier are carried by different signalings.

In an embodiment, the indication information is sent to the terminal. The indication information indicates the information of the antenna port of the second-type antenna signal. The indication information includes a first indication identifier, and the first indication identifier is configured to instruct the terminal to determine a first relationship from a preset relationship. The preset relationship includes a relationship between an indication identifier and an antenna port, and each indication identifier corresponds to an antenna port. The preset relationship at least includes a relationship between a first-type antenna signal and an antenna port, and a relationship between a second-type antenna signal and an antenna port. A numeric count of antenna ports supported by the second-type antenna signal is greater than a numeric count of antenna ports supported by the first type of antenna signal. The first relationship indicates one or more antenna ports.

For example, the antenna signal is a DMRS, the first-type antenna signal is a first-type DMRS, the second-type antenna signal is a second-type DMRS, and the antenna port is a DMRS port.

In these embodiments of the present invention, the indication information is sent to the terminal. The indication information indicates the information of the antenna port of the second-type antenna signal. Herein, since the indication information indicates the information of the antenna port of the second-type antenna signal, after receiving the indication information, the terminal can determine the antenna port according to the information of the antenna port of the second-type antenna signal indicated by the indication information. Compared with the case where only the antenna port of the first-type antenna signal is determined, the antenna port of the second-type antenna signal further exists, the terminal of the present invention is able to clearly determine the antenna ports of different types of antenna signals and utilize the corresponding antenna port for communication. In this way, the adaptability is improved, and wireless transmission based on the antenna port(s) are more reliable.

It should be noted that those skilled in the art can understand that the methods provided in the embodiments of the present invention can be executed alone or together with some methods in the embodiments of the present invention or some methods in related technologies.

As shown in FIG. 3, a method for indicating information of a demodulation reference signal (DMRS) port is provided in embodiments. The method is performed by an access network device, and the method includes the following step.

In step 31, indication information is sent to a terminal.

The indication information indicates information of a DMRS port of a second-type DMRS.

In an embodiment, the indication information is sent to the terminal. The indication information indicates information of a DMRS port of a second-type DMRS for CJT.

In an embodiment, the indication information is sent to the terminal via a high-layer signaling. The indication information indicates information of a DMRS port of a second-type DMRS. The high-layer signaling may be a radio resource control (RRC) signaling or a media access control (MAC) control element (CE) signaling.

In an embodiment, the indication information is sent to the terminal via DCI. The indication information indicates information of a DMRS port of a second-type DMRS.

In an embodiment, the indication information is sent to the terminal. The indication information indicates the information of the DMRS port of the second-type DMRS, and a numeric count of DMRS ports supported by the second-type DMRS is greater than a numeric count of DMRS ports supported by a first-type DMRS.

In an embodiment, the indication information is sent to the terminal. The indication information includes first indication information and second indication information. The first indication information includes a first indication identifier. The second indication information includes a second indication identifier. The first indication identifier indicates a first relationship of a preset corresponding relationship, and the second indication identifier indicates the DMRS port of the second-type DMRS determined by the first relationship. The first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by a first-type DMRS.

In an embodiment, a numeric count of DMRS ports supported by the second-type DMRS is N times a numeric count of DMRS ports supported by the first-type DMRS. For example, N=2, that is, the second-type DMRS supports twice the numeric count of DMRS ports supported by the first-type DMRS, and thus is an enhancement on the numeric count of DMRS ports supported by the first-type DMRS.

It refers to Table 1 again. The preset corresponding relationship may be the relationship between the indication value and the DMRS port shown in Table 1. The first relationship may be the relationship between the indication value and the corresponding DMRS port determined from the preset corresponding relationship based on the indication value, for example, a relationship between an indication value "10" and port numbers 0, 1, 2, and 3 of the corresponding DMRS ports.

In an embodiment, port numbers of the DMRS ports of the first-type DMRS are 0, 1, 2 and 3, and port numbers of the DMRS ports of the second-type DMRS are 0, 1, 2, 3, 4, 5, 6 and 7.

In an embodiment, the indication information is sent to the terminal. The indication information includes first indication information and second indication information. The first indication information includes a first indication identifier. The second indication information includes a second indication identifier. The first indication identifier indicates a first relationship of a preset corresponding relationship, and the second indication identifier indicates an offset. The offset is configured to instruct the terminal to determine the information of the DMRS port of the second-type DMRS according to the DMRS port in the first relationship corresponding to the first indication identifier and the offset. The first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by a first-type DMRS.

In an embodiment, the indication information is sent to the terminal. The indication information includes first indication information and second indication information. The first indication information includes a first indication identifier. The second indication information includes a second indication identifier. The first indication identifier indicates a first relationship of a preset corresponding relationship, and the second indication identifier indicates an offset. The offset is configured to instruct the terminal to determine the information of the DMRS port of the second-type DMRS according to the DMRS port in the first relationship corresponding to the first indication identifier and the offset. The first relationship is one item of the preset corresponding relationship. The preset relationship includes a relationship between an indication identifier and a DMRS port, and each indication identifier corresponds to a DMRS port. The first relationship indicates one or more DMRS ports of the first-type DMRS. A numeric count of DMRS ports supported by the second-type DMRS is greater than a numeric count of DMRS ports supported by a first-type DMRS.

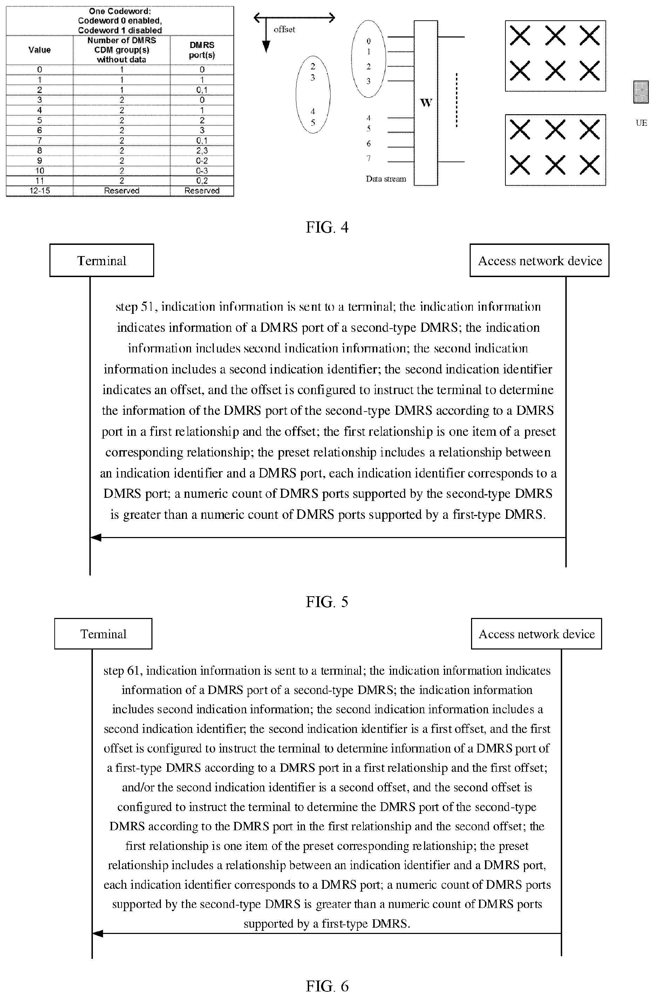

For example, as shown in FIG. 4, the preset relationship is the relationship between the indication value and the DMRS port of the first-type DMRS in Table 1, and the DMRS ports of the first-type DMRS are ports 0, 1, 2, or 3. The first indication identifier indicates "10", and the first indication identifier indicates the first relationship between "10" and ports {0, 1, 2, 3}. If the second indication identifier indicates "2", that is, an offset of 2 is performed, the DMRS ports of the second-type DMRS obtained after the offset are ports {2, 3, 4, 5}.

In an embodiment, the indication information is sent to the terminal. The indication information includes first indication information and second indication information. The first indication information includes a first indication identifier. The second indication information includes a second indication identifier. The second indication identifier indicates an offset. The offset is configured to instruct the terminal to determine the information of the DMRS port of the second-type DMRS according to the DMRS port in a first relationship corresponding to the first indication identifier and the offset. The first indication identifier indicates the first relationship of the preset corresponding relationship, and the first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by a first-type DMRS. The first relationship indicates one or more DMRS ports. The second indication identifier is a first offset, and the first offset is configured to instruct the terminal to determine the DMRS port of the second-type DMRS according to the DMRS port in the first relationship corresponding to the first indication identifier and the first offset; and/or the second indication identifier is a second offset, and the second offset is configured to instruct the terminal to determine the DMRS port of the second-type DMRS according to the DMRS port in the first relationship corresponding to the first indication identifier and the second offset.

In an embodiment, offset values corresponding to at least two DMRS ports of the first-type DMRS are different.

For example, referring to FIG. 4, the preset relationship is the relationship between the indication value and the DMRS port of the first-type DMRS in Table 1, and the DMRS ports of the first-type DMRS are ports 0, 1, 2 and 3. The first indication identifier indicates "10", and the first indication identifier indicates the first relationship between "10" and ports {0, 1, 2, 3}. If the second indication identifier indicates a first offset "4", which is an offset for ports 0, 1 and 2, and a second offset "5", which is an offset for port 3, after performing the offsets, the DMRS ports of the second-type DMRS obtained after the offsets are ports {4, 5, 6, 8}.

In an embodiment, the offset value is determined according to a code division multiplexing (CDM) group in which a DMRS port of the first type DMRS is used.

In an embodiment, the offset value is determined according to a code division multiplexing (CDM) group used by a DMRS port of the first type DMRS.

For example, referring to FIG. 4, the preset relationship is the relationship between the indication value and the DMRS port of the first-type DMRS in Table 1, and the DMRS ports of the first-type DMRS are ports 0, 1, 2 and 3. The first indication identifier indicates "10", and the first indication identifier indicates the first relationship between "10" and ports {0, 1, 2}. In a case where the second indication identifier indicates a first offset, for example, indicating "0", and a second offset, for example, indicating "1", the first offset is an offset for ports 0 and 1 in the same CDM group, and the second offset is an offset for port 2 in another CDM group, after performing the offsets, the DMRS ports of the second-type DMRS obtained after the offset are ports {0, 1, 3}.

In an embodiment, the first indication information and the second indication information are carried in the same signaling, and the signaling includes the first indication identifier and the second indication identifier.

In an embodiment, the first indication information and the second indication information are carried in different signalings, and the first indication identifier and the second indication identifier are carried by different signalings.

In an embodiment, the indication information is sent to the terminal. A first relationship indicates one or more DMRS ports. The indication information includes a first indication identifier. The first indication identifier is configured to instruct the terminal to determine the first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. A numeric count of DMRS ports supported by the second-type DMRS is greater than a numeric count of DMRS ports supported by the first-type DMRS.

For example, referring to Table 2, the relationship between the first-type DMRS and the DMRS port may be a relationship indicated by indication values 0 to 12, and the relationship between the second-type DMRS and the DMRS port may be a relationship indicated by 0 to X.

**Table 2**

| **One Codeword: Codeword 0 enabled, Codeword 1 disabled** | | |
|---|---|---|
| **Indication value** | **Number of DMRS code division multiplexing (CDM) groups without data** | **DMRS port(s)** |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 2 | 6,7 |
| ... | ... | ... |
| X | X1 | Y1 |

It can be understood that Table 2 is an extended table based on Table 1.

It may be understood that each element in Table 2 exists independently. These elements are listed in the same table as an example, but it does not mean that all elements in the table must exist simultaneously as shown in this table. A value of an element is independent of a value of any other element in Table 2. Therefore, it can be understood by those skilled in the art that the value of each element in Table 2 is an independent example. In addition, any combination of a row, a column, or multiple element values of the table can be used as an independent example.

In these embodiments of the present invention, the indication information is sent to the terminal. The indication information indicates the information of the DMRS port of the second-type DMRS. Herein, since the indication information indicates the information of the DMRS port of the second-type DMRS, after receiving the indication information, the terminal can determine the DMRS port according to the information of the DMRS port of the second-type DMRS indicated by the indication information. Compared with the case where only the DMRS port of the first-type DMRS is determined, the DMRS port of the second-type DMRS further exists, the terminal of the present invention is able to clearly determine the DMRS ports of different types of DMRSs and utilize the corresponding DMRS port for communication. In this way, the adaptability is improved, and wireless transmission based on the DMRS port(s) are more reliable. In addition, in these embodiments of the present invention, on the one hand, the corresponding relationship between the indication value of the first-type DMRS and the DMRS port can be partially reused to reduce design complexity. On the other hand, it can better support switching from the first-type DMRS to the second-type DMRS, and can indicate an appropriate DMRS mapping method to the UE according to channel conditions in practice.

It should be noted that those skilled in the art can understand that the methods provided in the embodiments of the present invention can be executed alone or together with some methods in the embodiments of the present invention or some methods in related technologies.

As shown in FIG. 5, a method for indicating information of a DMRS port is provided in embodiments. The method is performed by an access network device, and the method includes the following step.

In step 51, indication information is sent to a terminal.

The indication information indicates information of a DMRS port of a second-type DMRS. The indication information includes second indication information. The second indication information includes a second indication identifier. The second indication identifier indicates an offset, and the offset is configured to instruct the terminal to determine the information of the DMRS port of the second-type DMRS according to a DMRS port in a first relationship and offset. The first relationship is one item of a preset corresponding relationship. The preset relationship includes a relationship between an indication identifier and a DMRS port, each indication identifier corresponds to a DMRS port. A numeric count of DMRS ports supported by the second-type DMRS is greater than a numeric count of DMRS ports supported by a first-type DMRS.

In an embodiment, the DMRS port is used for CJT.

In an embodiment, the preset corresponding relationship may be sent by the network, may be specified by a protocol, or may be pre-configured.

In an embodiment, the indication information is sent to the terminal. The indication information indicates information of the DMRS port of the second-type DMRS. The indication information includes first indication information and second indication information. The first indication information includes a first indication identifier. The second indication information includes a second indication identifier. The second indication identifier indicates an offset, and the offset is configured to instruct the terminal to determine the information of the DMRS port of the second-type DMRS according to the DMRS port in a first relationship corresponding to the first indication identifier and offset. The first indication identifier indicates a first relationship of a preset corresponding relationship, and the first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by the first-type DMRS.

In an embodiment, the indication information is sent to the terminal. The indication information indicates the information of the DMRS port of the second-type DMRS. The indication information includes first indication information and second indication information. The first indication information includes a first indication identifier. The second indication information includes a second indication identifier. The second indication identifier indicates an offset, and the offset is configured to instruct the terminal to determine the information of the DMRS port of the second-type DMRS according to the DMRS port in a first relationship corresponding to the first indication identifier and offset. The first indication identifier indicates a first relationship of a preset corresponding relationship, and the first relationship is one item of the preset corresponding relationship. The preset relationship includes a relationship between an indication identifier and a DMRS port, and each indication identifier corresponds to a DMRS port. The first relationship indicates one or more DMRS ports of a first-type DMRS. A numeric count of DMRS ports supported by the second-type DMRS is greater than a numeric count of DMRS ports supported by the first-type DMRS.

For example, as shown in FIG. 4, the preset relationship is the relationship between the indication value and the DMRS port of the first-type DMRS in Table 1, and the DMRS ports of the first-type DMRS are ports 0, 1, 2, or 3. The first indication identifier indicates "10", and the first indication identifier indicates the first relationship between "10" and ports {0, 1, 2, 3}. If the second indication identifier indicates "2", that is, an offset of 2 is performed, the DMRS ports of the second-type DMRS obtained after the offset are ports {2, 3, 4, 5}.

In an embodiment, the indication information is sent to the terminal. The indication information indicates information of the DMRS port of the second-type DMRS. The indication information includes first indication information and second indication information. The first indication information includes a first indication identifier. The second indication information includes a second indication identifier. The second indication identifier indicates an offset, and the offset is configured to instruct the terminal to determine the information of the DMRS port of the second-type DMRS according to the DMRS port in a first relationship corresponding to the first indication identifier and offset. The first indication identifier indicates a first relationship of a preset corresponding relationship, and the first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by the first-type DMRS. The first relationship indicates one or more DMRS ports. The second indication identifier is a first offset, and the first offset is configured to instruct the terminal to determine the DMRS port of the second-type DMRS according to the DMRS port in the first relationship corresponding to the first indication identifier and the first offset; and/or the second indication identifier is a second offset, and the second offset is configured to instruct the terminal to determine the DMRS port of the second-type DMRS according to the DMRS port in the first relationship corresponding to the first indication identifier and the second offset.

In an embodiment, offset values corresponding to at least two DMRS ports of the first-type DMRS are different.

For example, referring to FIG. 4, the preset relationship is the relationship between the indication value and the DMRS port of the first-type DMRS in Table 1, and the DMRS ports of the first-type DMRS are ports 0, 1, 2 and 3. The first indication identifier indicates "10", and the first indication identifier indicates the first relationship between "10" and ports {0, 1, 2, 3}. If the second indication identifier indicates a first offset, e.g., "4", which is an offset for ports 0, 1 and 2, and a second offset, e.g., "5", which is an offset for port 3, after performing the offsets, the DMRS ports of the second-type DMRS obtained after the offsets are ports {4, 5, 6, 8}.

In an embodiment, the offset value is determined according to a CDM group in which a DMRS port of the first type DMRS is located.

For example, referring to FIG. 4, the preset relationship is the relationship between the indication value and the DMRS port of the first-type DMRS in Table 1, and the DMRS ports of the first-type DMRS are ports 0, 1, 2 and 3. The first indication identifier indicates "10", and the first indication identifier indicates the first relationship between "10" and ports {0, 1, 2}. In a case where the second indication identifier indicates a first offset, for example, indicating "0", and a second offset, for example, indicating "1", the first offset is an offset for ports 0 and 1 in the same CDM group, and the second offset is an offset for port 2 in another CDM group, after performing the offsets, the DMRS ports of the second-type DMRS obtained after the offset are ports {0, 1, 3}.

In an embodiment, the first indication information and the second indication information are carried in the same signaling, and the signaling includes the first indication identifier and the second indication identifier.

In an embodiment, the first indication information and the second indication information are carried in different signalings, and the first indication identifier and the second indication identifier are carried by different signalings.

In these embodiments of the present invention, the indication information is sent to the terminal. The indication information includes the second indication information. The second indication information includes the second indication identifier. The second indication identifier indicates the offset configured to instruct the terminal to determine the information of the DMRS port of the second-type DMRS according to the DMRS port in the first relationship and the offset. The first relationship is one item of the preset corresponding relationship. The preset relationship includes the relationship between the indication identifier and the DMRS port, each indication identifier corresponds to the DMRS port. The numeric count of DMRS ports supported by the second-type DMRS is greater than the numeric count of DMRS ports supported by the first-type DMRS. Herein, since the indication information indicates the offset, after receiving the indication information, the terminal can determine the DMRS port according to the offset and the first relationship indicated by the indication information. Compared with the case where only the DMRS port of the first-type DMRS is determined, the DMRS port of the second-type DMRS further exists, the terminal of the present invention is able to clearly determine the DMRS ports of different types of antenna signals and utilize the corresponding DMRS port for communication. In this way, the adaptability is improved, and wireless transmission based on the DMRS port(s) are more reliable.

In addition, in these embodiments of the present invention, on the one hand, the first relationship can be reused to reduce design complexity. On the other hand, flexibility of the port indication when the first relationship is reused is enhanced, so that appropriate port(s) can be allocated to the UE in the MU-MIMO, thereby ensuring performance and/or throughput of a MU-MIMO system.

It should be noted that those skilled in the art can understand that the methods provided in the embodiments of the present invention can be executed alone or together with some methods in the embodiments of the present invention or some methods in related technologies.

As shown in FIG. 6, a method for indicating information of a DMRS port is provided in embodiments. The method is performed by an access network device, and the method includes the following step.

In step 61, indication information is sent to a terminal.

The indication information indicates information of a DMRS port of a second-type DMRS. The indication information includes second indication information. The second indication information includes a second indication identifier. The second indication identifier is a first offset, and the first offset is configured to instruct the terminal to determine the information of the DMRS port of the second-type DMRS according to a DMRS port in a first relationship and the first offset; and/or the second indication identifier is a second offset, and the second offset is configured to instruct the terminal to determine the DMRS port of the second-type DMRS according to the DMRS port in the first relationship and the second offset. The first relationship is one item of the preset corresponding relationship. The preset relationship includes a relationship between an indication identifier and a DMRS port, each indication identifier corresponds to a DMRS port. A numeric count of DMRS ports supported by the second-type DMRS is greater than a numeric count of DMRS ports supported by a first-type DMRS.

It should be noted that the first relationship may be pre-stored in the terminal.

For the description of step 61, reference can be made to the relevant description of step 51, which will not be repeated here.

In the present invention, after receiving the indication information, the DMRS port of the second type DMRS can be determined according to the second indication identifier and the first relationship.

It should be noted that those skilled in the art can understand that the methods provided in the embodiments of the present invention can be executed alone or together with some methods in the embodiments of the present invention or some methods in related technologies.

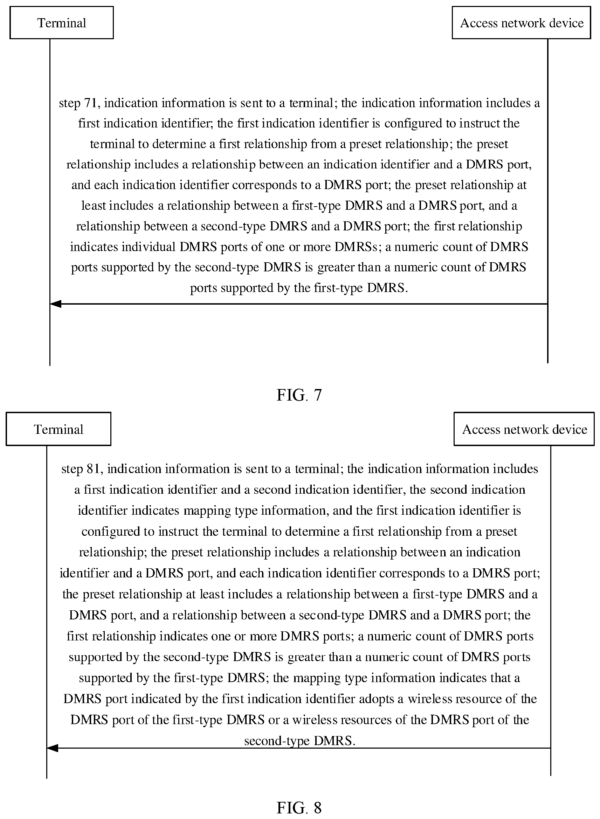

As shown in FIG. 7, a method for indicating information of a DMRS port is provided in embodiments. The method is performed by an access network device, and the method includes the following step.

In step 71, indication information is sent to a terminal.

The indication information includes a first indication identifier. The first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports of the DMRS. A numeric count of DMRS ports supported by the second-type DMRS is greater than a numeric count of DMRS ports supported by the first-type DMRS.

It should be noted that after the access network device sends the indication information to the terminal, it further sends the second indication identifier to the terminal, where the second indication identifier indicates mapping type information, and the mapping type information indicates that a DMRS port indicated by the first indication identifier adopts a wireless resource of the DMRS port of the first-type DMRS or a wireless resource of the DMRS port of the second-type DMRS, which indicates whether the DMRS port is a port of the first-type DMRS or a port of the second-type DMRS. The mapping type information can also be sent together with the indication information, which is not limited here.

In an embodiment, the indication information is sent to the terminal. The indication information includes a first indication identifier and a second indication identifier, the second indication identifier indicates mapping type information, and the first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the first-type DMRS or a wireless resources of the DMRS port of the second-type DMRS.

In an embodiment, the DMRS port is used for CJT.

In an embodiment, the indication information is sent to the terminal. The indication information includes a first indication identifier and a second indication identifier, the second indication identifier indicates mapping type information, and the first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the first-type DMRS. In this case, the DMRS port determined according to the preset relationship is the DMRS port of the first-type DMRS.

In an embodiment, the indication information is sent to the terminal. The indication information includes a first indication identifier and mapping type information. The first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the second-type DMRS. In this case, the DMRS port determined according to the preset relationship is the DMRS port of the second-type DMRS.

In these embodiments of the present invention, the indication information is sent to the terminal. The indication information includes the first indication identifier. The first indication identifier is configured to instruct the terminal to determine the first relationship from the preset relationship. The preset relationship includes the relationship between the indication identifier and the DMRS port, and each indication identifier corresponds to the DMRS port. The preset relationship at least includes the relationship between the first-type DMRS and the DMRS port, and the relationship between the second-type DMRS and the DMRS port. The first relationship indicates one or more DMRS port of the DMRS. The numeric count of DMRS ports supported by the second-type DMRS is greater than the numeric count of DMRS ports supported by the first-type DMRS. Since the preset relationship at least includes the relationship between the first-type DMRS and the DMRS port, and the relationship between the second-type DMRS and the DMRS port, after receiving the indication information, the terminal can determine the DMRS port of the second-type DMRS according to the relationship between the first-type DMRS and the DMRS port, and the relationship between the second-type DMRS and the DMRS port indicated by the preset relationship.

It should be noted that those skilled in the art can understand that the methods provided in the embodiments of the present invention can be executed alone or together with some methods in the embodiments of the present invention or some methods in related technologies.

As shown in FIG. 8, a method for indicating information of a DMRS port is provided in embodiments. The method is performed by an access network device, and the method includes the following step.

In step 81, indication information is sent to a terminal.

In an embodiment, the indication information includes a first indication identifier and a second indication identifier, the second indication identifier indicates mapping type information, and the first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the first-type DMRS or a wireless resources of the DMRS port of the second-type DMRS.

In an embodiment, the DMRS port is used for CJT.

In an embodiment, the indication information is sent to the terminal. The indication information includes a first indication identifier and a second indication identifier, the second indication identifier indicates mapping type information, and the first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the first-type DMRS. In this case, the DMRS port determined according to the preset relationship is the DMRS port of the first-type DMRS.

In an embodiment, the indication information is sent to the terminal. The indication information includes a first indication identifier and a second indication identifier. The second indication identifier indicates mapping type information. The first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the second-type DMRS. In this case, the DMRS port determined according to the preset relationship is the DMRS port of the second-type DMRS.

In these embodiments of the present invention, the indication information is sent to the terminal. The indication information includes the first indication identifier and the second indication identifier, the second indication identifier indicates the mapping type information, and the first indication identifier is configured to instruct the terminal to determine the first relationship from the preset relationship. The preset relationship includes the relationship between the indication identifier and the DMRS port, and each indication identifier corresponds to the DMRS port. The preset relationship at least includes the relationship between the first-type DMRS and the DMRS port, and the relationship between the second-type DMRS and the DMRS port. The first relationship indicates one or more DMRS ports. The numeric count of DMRS ports supported by the second-type DMRS is greater than the numeric count of DMRS ports supported by the first-type DMRS. The mapping type information indicates that the DMRS port indicated by the first indication identifier adopts the wireless resource of the DMRS port of the first-type DMRS or the wireless resources of the DMRS port of the second-type DMRS. Since the preset relationship at least includes the relationship between the first-type DMRS and the DMRS port and the relationship between the second-type DMRS and the DMRS port, and the mapping type information indicates the wireless resource of the DMRS port of the first-type DMRS or indicates the wireless resource of the DMRS port of the second-type DMRS, after receiving the indication information, the terminal can determine whether the DMRS port is the DMRS port of the first-type DMRS or the DMRS port of the second-type DMRS according to the preset relationship and the mapping type information. In addition, in these embodiments of the present invention, on the one hand, the corresponding relationship between the indication value and the DMRS port of the first-type DMRS can be partially reused to reduce design complexity. On the other hand, it can better support switching from the first-type DMRS to the second-type DMRS, and can indicate an appropriate DMRS mapping method to the UE according to channel conditions in practice.

It should be noted that those skilled in the art can understand that the methods provided in the embodiments of the present invention can be executed alone or together with some methods in the embodiments of the present invention or some methods in related technologies.

It should be noted that the indication information may indicate at least one of the first indication identifier information, the second indication identifier information or the mapping type information as described in the above-mentioned embodiments. That is, the indication information may indicate a combination of one or more of the first indication identifier information, the second indication identifier information or the mapping type information. When the indication information only indicates a part of the first indication identifier information, the second indication identifier information and the mapping type information, the rest may be indicated by information other than the indication information (it may be understood as being carried by signaling other than the signaling carrying the indication information), which is not limited here.

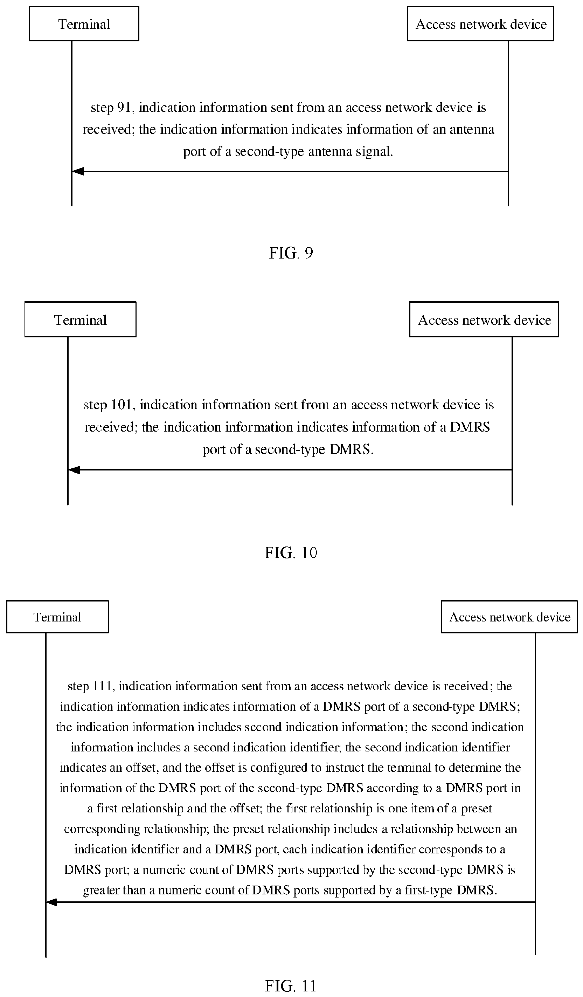

As shown in FIG. 9, a method for indicating information of an antenna port is provided in embodiments. The method is performed by a terminal, and the method includes the following step.

In step 91, indication information sent from an access network device is received.

The indication information indicates information of an antenna port of a second-type antenna signal.

Herein, the terminal involved in the present invention may be, but is not limited to, a mobile phone, a wearable device, a vehicle-mounted terminal, a road side unit (RSU), a smart home terminal, an industrial sensor device and/or a medical device. In some embodiments, the terminal may be a Redcap terminal or a predetermined version of a new radio (NR) terminal (for example, an R17 NR terminal).

The access network device involved in the present invention may be a base station, which may be of various types, for example, a base station of a third generation (3G) mobile communication network, a base station of a fourth generation (4G) mobile communication network, a base station of a fifth generation (5G) mobile communication network, or other evolved base stations.

In an embodiment, the indication information sent from the access network device is received. The indication information indicates information of an antenna port of a second-type antenna signal for CJT.

In an embodiment, the indication information sent from the access network device is received via a high-layer signaling. The indication information indicates information of an antenna port of a second-type antenna signal. The high-layer signaling may be a radio resource control (RRC) signaling or a media access control (MAC) control element (CE) signaling.

In an embodiment, the indication information sent from the access network device is received via DCI. The indication information indicates information of an antenna port of a second-type antenna signal.

In an embodiment, the indication information sent from the access network device is received. The indication information indicates the information of the antenna port of the second-type antenna signal, and a numeric count of antenna ports supported by the second-type antenna signal is greater than a numeric count of antenna ports supported by a first-type antenna signal.

In an embodiment, the indication information sent from the access network device is received. The indication information includes first indication information and second indication information. The first indication information includes a first indication identifier. The second indication information includes a second indication identifier. The first indication identifier indicates a first relationship of a preset corresponding relationship, and the second indication identifier indicates an antenna port of the second-type antenna signal determined by the first relationship. The first relationship is one item of the preset corresponding relationship. The preset relationship includes a relationship between an indication identifier and an antenna port, and each indication identifier corresponds to an antenna port. A numeric count of antenna ports supported by the second-type antenna signal is greater than a numeric count of antenna ports supported by a first-type antenna signal.

In an embodiment, a numeric count of DMRS ports supported by the second-type DMRS is N times a numeric count of DMRS ports supported by the first-type DMRS, where N is a real number greater than 1. For example, N=2, that is, the second-type DMRS supports twice the numeric count of DMRS ports supported by the first-type DMRS, and thus is an enhancement on the numeric count of DMRS ports supported by the first-type DMRS.

In an embodiment, the indication information sent from the access network device is received. The indication information includes first indication information and second indication information. The first indication information includes a first indication identifier. The second indication information includes a second indication identifier. The first indication identifier indicates a first relationship of a preset corresponding relationship, and the second indication identifier indicates an offset. The offset is configured to instruct the terminal to determine the information of the antenna port of the second-type antenna signal according to the antenna port in the first relationship corresponding to the first indication identifier and the offset. The first relationship is one item of the preset corresponding relationship. The preset relationship includes a relationship between an indication identifier and an antenna port, and each indication identifier corresponds to an antenna port. A numeric count of antenna ports supported by the second-type antenna signal is greater than a numeric count of antenna ports supported by a first-type antenna signal.

In an embodiment, the indication information sent from the access network device is received. The indication information includes first indication information and second indication information. The first indication information includes a first indication identifier. The second indication information includes a second indication identifier. The first indication identifier indicates a first relationship of a preset corresponding relationship, and the second indication identifier is an offset. The offset is configured to instruct the terminal to determine the information of the antenna port of the second-type antenna signal according to the antenna port in the first relationship corresponding to the first indication identifier and the offset. The first relationship is one item of the preset corresponding relationship. The preset relationship includes a relationship between an indication identifier and an antenna port, and each indication identifier corresponds to an antenna port. A numeric count of antenna ports supported by the second-type antenna signal is greater than a numeric count of antenna ports supported by a first-type antenna signal. The first relationship indicates one or more antenna ports of the first-type antenna signal.

In an embodiment, the indication information sent from the access network device is received. The indication information includes first indication information and second indication information. The first indication information includes a first indication identifier. The second indication information includes a second indication identifier. The first indication identifier indicates a first relationship of a preset corresponding relationship, and the second indication identifier indicates an offset. The offset is configured to instruct the terminal to determine the information of the antenna port of the second-type antenna signal according to the antenna port in the first relationship corresponding to the first indication identifier and the offset. The first relationship is one item of the preset corresponding relationship. The preset relationship includes a relationship between an indication identifier and an antenna port, and each indication identifier corresponds to an antenna port. A numeric count of antenna ports supported by the second-type antenna signal is greater than a numeric count of antenna ports supported by a first-type antenna signal. The first relationship indicates one or more antenna ports. The second indication identifier is a first offset, and the first offset is configured to instruct the terminal to determine the antenna port of the second-type antenna signal according to the antenna port in the first relationship corresponding to the first indication identifier and the first offset; and/or the second indication identifier is a second offset, and the second offset is configured to instruct the terminal to determine the antenna port of the second-type antenna signal according to the antenna port in the first relationship corresponding to the first indication identifier and the second offset.

In an embodiment, the first indication information and the second indication information are carried in the same signaling, and the signaling includes the first indication identifier and the second indication identifier.

In an embodiment, the first indication information and the second indication information are carried in different signalings, and the first indication identifier and the second indication identifier are carried by different signalings.

In an embodiment, the indication information sent from the access network device is received. The indication information indicates the information of the antenna port of the second-type antenna signal. The indication information includes a first indication identifier, and the first indication identifier is configured to instruct the terminal to determine a first relationship from a preset relationship. The preset relationship includes a relationship between an indication identifier and an antenna port, and each indication identifier corresponds to an antenna port. The preset relationship at least includes a relationship between a first-type antenna signal and an antenna port, and a relationship between a second-type antenna signal and an antenna port. A numeric count of antenna ports supported by the second-type antenna signal is greater than a numeric count of antenna ports supported by the first type of antenna signal. The first relationship indicates one or more antenna ports.

For example, the antenna signal is a DMRS, the first-type antenna signal is a first-type DMRS, the second-type antenna signal is a second-type DMRS, and the antenna port is a DMRS port.

In these embodiments of the present invention, the indication information sent from the access network device is received. The indication information indicates the information of the antenna port of the second-type antenna signal. Herein, since the indication information indicates the information of the antenna port of the second-type antenna signal, after receiving the indication information, the terminal can determine the antenna port according to the information of the antenna port of the second-type antenna signal indicated by the indication information. Compared with the case where only the antenna port of the first-type antenna signal is determined, the antenna port of the second-type antenna signal further exists, the terminal of the present invention is able to clearly determine the antenna ports of different types of antenna signals and utilize the corresponding antenna port for communication. In this way, the adaptability is improved, and wireless transmission based on the antenna port(s) are more reliable.

It should be noted that those skilled in the art can understand that the methods provided in the embodiments of the present invention can be executed alone or together with some methods in the embodiments of the present invention or some methods in related technologies.

As shown in FIG. 10, a method for indicating information of a DMRS port is provided in embodiments. The method is performed by a terminal, and the method includes the following step.

In step 101, indication information sent from an access network device is received.

The indication information indicates information of a DMRS port of a second-type DMRS.

In an embodiment, the indication information is sent to the terminal. The indication information indicates information of a DMRS port of a second-type DMRS for CJT.

In an embodiment, the indication information sent from the access network device is received via a high-layer signaling. The indication information indicates information of a DMRS port of a second-type DMRS. The high-layer signaling may be a radio resource control (RRC) signaling or a media access control (MAC) control element (CE) signaling.

In an embodiment, the indication information sent from the access network device is received via DCI. The indication information indicates information of a DMRS port of a second-type DMRS.

In an embodiment, the indication information sent from the access network device is received. The indication information indicates the information of the DMRS port of the second-type DMRS, and a numeric count of DMRS ports supported by the second-type DMRS is greater than a numeric count of DMRS ports supported by a first-type DMRS.

In an embodiment, the indication information sent from the access network device is received. The indication information includes first indication information and second indication information. The first indication information includes a first indication identifier. The second indication information includes a second indication identifier. The first indication identifier indicates a first relationship of a preset corresponding relationship, and the second indication identifier indicates the DMRS port of the second-type DMRS determined by the first relationship. The first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by a first-type DMRS.

In an embodiment, a numeric count of DMRS ports supported by the second-type DMRS is N times a numeric count of DMRS ports supported by the first-type DMRS. For example, N=2, that is, the second-type DMRS supports twice the numeric count of DMRS ports supported by the first-type DMRS, and thus is an enhancement on the numeric count of DMRS ports supported by the first-type DMRS.

It refers to Table 1 again. The preset corresponding relationship may be the relationship between the indication value and the DMRS port shown in Table 1. The first relationship may be the relationship between the indication value and the corresponding DMRS port determined from the preset corresponding relationship based on the indication value, for example, a relationship between an indication value "10" and port numbers 0, 1, 2, and 3 of the corresponding DMRS ports.

In an embodiment, port numbers of the DMRS ports of the first-type DMRS are 0, 1, 2 and 3, and port numbers of the DMRS ports of the second-type DMRS are 0, 1, 2, 3, 4, 5, 6 and 7.

In an embodiment, the indication information sent from the access network device is received. The indication information includes first indication information and second indication information. The first indication information includes a first indication identifier. The second indication information includes a second indication identifier. The first indication identifier indicates a first relationship of a preset corresponding relationship, and the second indication identifier indicates an offset. The offset is configured to instruct the terminal to determine the information of the DMRS port of the second-type DMRS according to the DMRS port in the first relationship corresponding to the first indication identifier and the offset. The first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by a first-type DMRS.

In an embodiment, the indication information sent from the access network device is received. The indication information includes first indication information and second indication information. The first indication information includes a first indication identifier. The second indication information includes a second indication identifier. The first indication identifier indicates a first relationship of a preset corresponding relationship, and the second indication identifier indicates an offset. The offset is configured to instruct the terminal to determine the information of the DMRS port of the second-type DMRS according to the DMRS port in the first relationship corresponding to the first indication identifier and the offset. The first relationship is one item of the preset corresponding relationship. The preset relationship includes a relationship between an indication identifier and a DMRS port, and each indication identifier corresponds to a DMRS port. The first relationship indicates one or more DMRS ports of the first-type DMRS. A numeric count of DMRS ports supported by the second-type DMRS is greater than a numeric count of DMRS ports supported by a first-type DMRS.

For example, as shown in FIG. 4, the preset relationship is the relationship between the indication value and the DMRS port of the first-type DMRS in Table 1, and the DMRS ports of the first-type DMRS are ports 0, 1, 2, or 3. The first indication identifier indicates "10", and the first indication identifier indicates the first relationship between "10" and ports {0, 1, 2, 3}. If the second indication identifier indicates "2", that is, an offset of 2 is performed, the DMRS ports of the second-type DMRS obtained after the offset are ports {2, 3, 4, 5}.

In an embodiment, the indication information sent from the access network device is received. The indication information includes first indication information and second indication information. The first indication information includes a first indication identifier. The second indication information includes a second indication identifier. The second indication identifier indicates an offset. The offset is configured to instruct the terminal to determine the information of the DMRS port of the second-type DMRS according to the DMRS port in a first relationship corresponding to the first indication identifier and the offset. The first indication identifier indicates the first relationship of the preset corresponding relationship, and the first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by a first-type DMRS. The first relationship indicates one or more DMRS ports. The second indication identifier is a first offset, and the first offset is configured to instruct the terminal to determine the DMRS port of the second-type DMRS according to the DMRS port in the first relationship corresponding to the first indication identifier and the first offset; and/or the second indication identifier is a second offset, and the second offset is configured to instruct the terminal to determine the DMRS port of the second-type DMRS according to the DMRS port in the first relationship corresponding to the first indication identifier and the second offset.

In an embodiment, offset values corresponding to at least two DMRS ports of the first-type DMRS are different.

For example, referring to FIG. 4, the preset relationship is the relationship between the indication value and the DMRS port of the first-type DMRS in Table 1, and the DMRS ports of the first-type DMRS are ports 0, 1, 2 and 3. The first indication identifier indicates "10", and the first indication identifier indicates the first relationship between "10" and ports {0, 1, 2, 3}. If the second indication identifier indicates a first offset "4", which is an offset for ports 0, 1 and 2, and a second offset "5", which is an offset for port 3, after performing the offsets, the DMRS ports of the second-type DMRS obtained after the offsets are ports {4, 5, 6, 8}.

In an embodiment, the offset value is determined according to a code division multiplexing (CDM) group in which a DMRS port of the first type DMRS is used.

In an embodiment, the offset value is determined according to a code division multiplexing (CDM) group used by a DMRS port of the first type DMRS.

For example, referring to FIG. 4, the preset relationship is the relationship between the indication value and the DMRS port of the first-type DMRS in Table 1, and the DMRS ports of the first-type DMRS are ports 0, 1, 2 and 3. The first indication identifier indicates "10", and the first indication identifier indicates the first relationship between "10" and ports {0, 1, 2}. In a case where the second indication identifier indicates a first offset, for example, indicating "0", and a second offset, for example, indicating "1", the first offset is an offset for ports 0 and 1 in the same CDM group, and the second offset is an offset for port 2 in another CDM group, after performing the offsets, the DMRS ports of the second-type DMRS obtained after the offset are ports {0, 1, 3}.

In an embodiment, the first indication information and the second indication information are carried in the same signaling, and the signaling includes the first indication identifier and the second indication identifier.

In an embodiment, the first indication information and the second indication information are carried in different signalings, and the first indication identifier and the second indication identifier are carried by different signalings.

In an embodiment, the indication information sent from the access network device is received. A first relationship indicates one or more DMRS ports. The indication information includes a first indication identifier. The first indication identifier is configured to instruct the terminal to determine the first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. A numeric count of DMRS ports supported by the second-type DMRS is greater than a numeric count of DMRS ports supported by the first-type DMRS.

For example, referring to Table 2, the relationship between the first-type DMRS and the DMRS port may be a relationship indicated by indication values 0 to 12, and the relationship between the second-type DMRS and the DMRS port may be a relationship indicated by 0 to X.

It may be understood that each element in Table 1 exists independently. These elements are listed in the same table as an example, but it does not mean that all elements in the table must exist simultaneously as shown in this table. A value of an element is independent of a value of any other element in Table 1. Therefore, it can be understood by those skilled in the art that the value of each element in Table 1 is an independent example.

In these embodiments of the present invention, the indication information sent from the access network device is received. The indication information indicates the information of the DMRS port of the second-type DMRS. Herein, since the indication information indicates the information of the DMRS port of the second-type DMRS, after receiving the indication information, the terminal can determine the DMRS port according to the information of the DMRS port of the second-type DMRS indicated by the indication information. Compared with the case where only the DMRS port of the first-type DMRS is determined, the DMRS port of the second-type DMRS further exists, the terminal of the present invention is able to clearly determine the DMRS ports of different types of DMRSs and utilize the corresponding DMRS port for communication. In this way, the adaptability is improved, and wireless transmission based on the DMRS port(s) are more reliable. In addition, in these embodiments of the present invention, on the one hand, the corresponding relationship between the indication value of the first-type DMRS and the DMRS port can be partially reused to reduce design complexity. On the other hand, it can better support switching from the first-type DMRS to the second-type DMRS, and can indicate an appropriate DMRS mapping method to the UE according to channel conditions in practice.

It should be noted that those skilled in the art can understand that the methods provided in the embodiments of the present invention can be executed alone or together with some methods in the embodiments of the present invention or some methods in related technologies.

As shown in FIG. 11, a method for indicating information of a DMRS port is provided in embodiments. The method is performed by a terminal, and the method includes the following step.

In step 111, indication information sent from an access network device is received.

The indication information indicates information of a DMRS port of a second-type DMRS. The indication information includes second indication information. The second indication information includes a second indication identifier. The second indication identifier indicates an offset, and the offset is configured to instruct the terminal to determine the information of the DMRS port of the second-type DMRS according to a DMRS port in a first relationship and offset. The first relationship is one item of a preset corresponding relationship. The preset relationship includes a relationship between an indication identifier and a DMRS port, each indication identifier corresponds to a DMRS port. A numeric count of DMRS ports supported by the second-type DMRS is greater than a numeric count of DMRS ports supported by a first-type DMRS.

In an embodiment, the DMRS port is used for CJT.

In an embodiment, the preset corresponding relationship may be sent by the network, may be specified by a protocol, or may be pre-configured.

In an embodiment, the indication information sent from the access network device is received. The indication information indicates information of the DMRS port of the second-type DMRS. The indication information includes first indication information and second indication information. The first indication information includes a first indication identifier. The second indication information includes a second indication identifier. The second indication identifier indicates an offset, and the offset is configured to instruct the terminal to determine the information of the DMRS port of the second-type DMRS according to the DMRS port in a first relationship corresponding to the first indication identifier and offset. The first indication identifier indicates a first relationship of a preset corresponding relationship, and the first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by the first-type DMRS.

In an embodiment, the indication information sent from the access network device is received. The indication information indicates the information of the DMRS port of the second-type DMRS. The indication information includes first indication information and second indication information. The first indication information includes a first indication identifier. The second indication information includes a second indication identifier. The second indication identifier indicates an offset, and the offset is configured to instruct the terminal to determine the information of the DMRS port of the second-type DMRS according to the DMRS port in a first relationship corresponding to the first indication identifier and offset. The first indication identifier indicates a first relationship of a preset corresponding relationship, and the first relationship is one item of the preset corresponding relationship. The preset relationship includes a relationship between an indication identifier and a DMRS port, and each indication identifier corresponds to a DMRS port. The first relationship indicates one or more DMRS ports of a first-type DMRS. A numeric count of DMRS ports supported by the second-type DMRS is greater than a numeric count of DMRS ports supported by the first-type DMRS.

For example, as shown in FIG. 4, the preset relationship is the relationship between the indication value and the DMRS port of the first-type DMRS in Table 1, and the DMRS ports of the first-type DMRS are ports 0, 1, 2, or 3. The first indication identifier indicates "10", and the first indication identifier indicates the first relationship between "10" and ports {0, 1, 2, 3}. If the second indication identifier indicates "2", that is, an offset of 2 is performed, the DMRS ports of the second-type DMRS obtained after the offset are ports {2, 3, 4, 5}.

In an embodiment, the indication information sent from the access network device is received. The indication information indicates information of the DMRS port of the second-type DMRS. The indication information includes first indication information and second indication information. The first indication information includes a first indication identifier. The second indication information includes a second indication identifier. The second indication identifier indicates an offset, and the offset is configured to instruct the terminal to determine the information of the DMRS port of the second-type DMRS according to the DMRS port in a first relationship corresponding to the first indication identifier and offset. The first indication identifier indicates a first relationship of a preset corresponding relationship, and the first relationship is one item of the preset corresponding relationship. The preset relationship includes a relationship between an indication identifier and a DMRS port, and each indication identifier corresponds to a DMRS port. A numeric count of DMRS ports supported by the second-type DMRS is greater than a numeric count of DMRS ports supported by the first-type DMRS. The first relationship indicates one or more DMRS ports. The second indication identifier is a first offset, and the first offset is configured to instruct the terminal to determine the DMRS port of the second-type DMRS according to the DMRS port in the first relationship corresponding to the first indication identifier and the first offset; and/or the second indication identifier is a second offset, and the second offset is configured to instruct the terminal to determine the DMRS port of the second-type DMRS according to the DMRS port in the first relationship corresponding to the first indication identifier and the second offset.

In an embodiment, offset values corresponding to at least two DMRS ports of the first-type DMRS are different.

For example, referring to FIG. 4, the preset relationship is the relationship between the indication value and the DMRS port of the first-type DMRS in Table 1, and the DMRS ports of the first-type DMRS are ports 0, 1, 2 and 3. The first indication identifier indicates "10", and the first indication identifier indicates the first relationship between "10" and ports {0, 1, 2, 3}. If the second indication identifier indicates a first offset, e.g., "4", which is an offset for ports 0, 1 and 2, and a second offset, e.g., "5", which is an offset for port 3, after performing the offsets, the DMRS ports of the second-type DMRS obtained after the offsets are ports {4, 5, 6, 8}.

In an embodiment, the offset value is determined according to a CDM group in which a DMRS port of the first type DMRS is located.

For example, referring to FIG. 4, the preset relationship is the relationship between the indication value and the DMRS port of the first-type DMRS in Table 1, and the DMRS ports of the first-type DMRS are ports 0, 1, 2 and 3. The first indication identifier indicates "10", and the first indication identifier indicates the first relationship between "10" and ports {0, 1, 2}. In a case where the second indication identifier indicates a first offset, for example, indicating "0", and a second offset, for example, indicating "1", the first offset is an offset for ports 0 and 1 in the same CDM group, and the second offset is an offset for port 2 in another CDM group, after performing the offsets, the DMRS ports of the second-type DMRS obtained after the offset are ports {0, 1, 3}.

In an embodiment, the first indication information and the second indication information are carried in the same signaling, and the signaling includes the first indication identifier and the second indication identifier.

In an embodiment, the first indication information and the second indication information are carried in different signalings, and the first indication identifier and the second indication identifier are carried by different signalings.

In these embodiments of the present invention, the indication information sent from the access network device is received. The indication information includes the second indication information. The second indication information includes the second indication identifier. The second indication identifier indicates the offset configured to instruct the terminal to determine the information of the DMRS port of the second-type DMRS according to the DMRS port in the first relationship and the offset. The first relationship is one item of the preset corresponding relationship. The preset relationship includes the relationship between the indication identifier and the DMRS port, each indication identifier corresponds to the DMRS port. The numeric count of DMRS ports supported by the second-type DMRS is greater than the numeric count of DMRS ports supported by the first-type DMRS. Herein, since the indication information indicates the offset, after receiving the indication information, the terminal can determine the DMRS port according to the offset and the first relationship indicated by the indication information. Compared with the case where only the DMRS port of the first-type DMRS is determined, the DMRS port of the second-type DMRS further exists, the terminal of the present invention is able to clearly determine the DMRS ports of different types of antenna signals and utilize the corresponding DMRS port for communication. In this way, the adaptability is improved, and wireless transmission based on the DMRS port(s) are more reliable.

In addition, in these embodiments of the present invention, on the one hand, the first relationship can be reused to reduce design complexity. On the other hand, flexibility of the port indication when the first relationship is reused is enhanced, so that appropriate port(s) can be allocated to the UE in the MU-MIMO, thereby ensuring performance and/or throughput of a MU-MIMO system.

It should be noted that those skilled in the art can understand that the methods provided in the embodiments of the present invention can be executed alone or together with some methods in the embodiments of the present invention or some methods in related technologies.

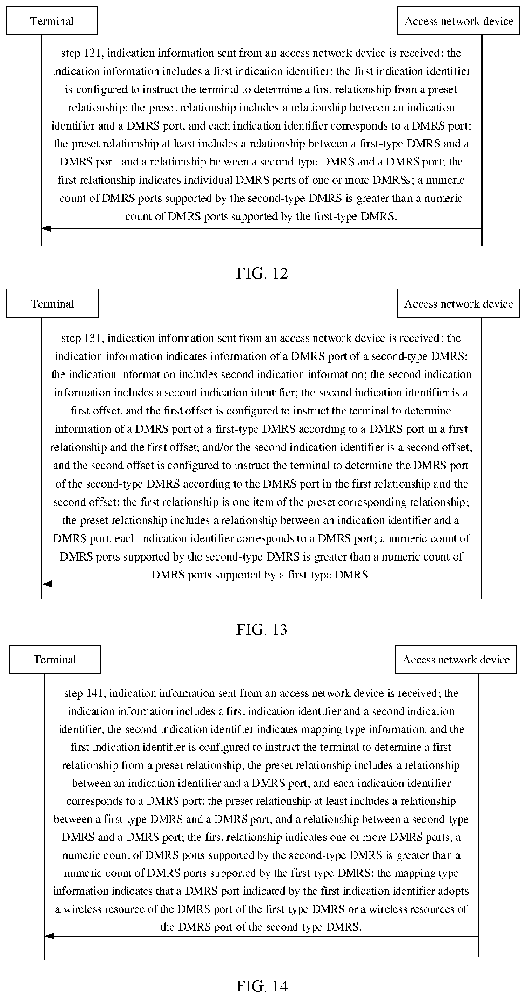

As shown in FIG. 12, a method for indicating information of a DMRS port is provided in embodiments. The method is performed by a terminal, and the method includes the following step.

In step 121, indication information sent from an access network device is received.

The indication information includes a first indication identifier. The first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS.

It should be noted that after the indication information sent from the access network device is received, the second indication identifier sent from the access network device may be further received, where the second indication identifier indicates mapping type information, and the mapping type information indicates that a DMRS port indicated by the first indication identifier adopts a wireless resource of the DMRS port of the first-type DMRS or a wireless resource of the DMRS port of the second-type DMRS, which indicates whether the DMRS port is a port of the first-type DMRS or a port of the second-type DMRS. The mapping type information can also be sent together with the indication information, which is not limited here.

In an embodiment, the indication information sent from the access network device is received. The indication information includes a first indication identifier and a second indication identifier, the second indication identifier indicates mapping type information, and the first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the first-type DMRS or a wireless resources of the DMRS port of the second-type DMRS.

In an embodiment, the DMRS port is used for CJT.

In an embodiment, the indication information sent from the access network device is received. The indication information includes a first indication identifier and a second indication identifier, the second indication identifier indicates mapping type information, and the first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the first-type DMRS. In this case, the DMRS port determined according to the preset relationship is the DMRS port of the first-type DMRS.

In an embodiment, the indication information sent from the access network device is received. The indication information includes a first indication identifier and a second indication identifier. The second indication identifier indicates mapping type information. The first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the second-type DMRS. In this case, the DMRS port determined according to the preset relationship is the DMRS port of the second-type DMRS.

In these embodiments of the present invention, indication information sent from the access network device is received. The indication information includes the first indication identifier and the mapping type information. The first indication identifier is configured to instruct the terminal to determine the first relationship from the preset relationship. The preset relationship includes the relationship between the indication identifier and the DMRS port, and each indication identifier corresponds to the DMRS port. The preset relationship at least includes the relationship between the first-type DMRS and the DMRS port, and the relationship between the second-type DMRS and the DMRS port. The first relationship indicates one or more DMRS port of the DMRS. The numeric count of DMRS ports supported by the second-type DMRS is greater than the numeric count of DMRS ports supported by the first-type DMRS. Since the preset relationship at least includes the relationship between the first-type DMRS and the DMRS port, and the relationship between the second-type DMRS and the DMRS port, after receiving the indication information, the terminal can determine the DMRS port of the second-type DMRS according to the relationship between the first-type DMRS and the DMRS port, and the relationship between the second-type DMRS and the DMRS port indicated by the preset relationship.

It should be noted that those skilled in the art can understand that the methods provided in the embodiments of the present invention can be executed alone or together with some methods in the embodiments of the present invention or some methods in related technologies.

As shown in FIG. 13, a method for indicating information of a DMRS port is provided in embodiments. The method is performed by a terminal, and the method includes the following step.

In step 131, indication information sent from an access network device is received.

The indication information indicates information of a DMRS port of a second-type DMRS. The indication information includes second indication information. The second indication information includes a second indication identifier. The second indication identifier is a first offset, and the first offset is configured to instruct the terminal to determine the information of the DMRS port of the second-type DMRS according to a DMRS port in a first relationship and the first offset; and/or the second indication identifier is a second offset, and the second offset is configured to instruct the terminal to determine the DMRS port of the second-type DMRS according to the DMRS port in the first relationship and the second offset. The first relationship is one item of the preset corresponding relationship. The preset relationship includes a relationship between an indication identifier and a DMRS port, each indication identifier corresponds to a DMRS port. A numeric count of DMRS ports supported by the second-type DMRS is greater than a numeric count of DMRS ports supported by a first-type DMRS.

It should be noted that the first relationship may be pre-stored in the terminal.

For the description of step 121, reference can be made to the relevant description of step 111, which will not be repeated here.

In the present invention, after the terminal receives the indication information, the DMRS port of the second type DMRS can be determined according to the second indication identifier and the first relationship.

It should be noted that those skilled in the art can understand that the methods provided in the embodiments of the present invention can be executed alone or together with some methods in the embodiments of the present invention or some methods in related technologies.

As shown in FIG. 14, a method for indicating information of a DMRS port is provided in embodiments. The method is performed by a terminal, and the method includes the following step.

In step 141, indication information sent from an access network device is received.

In an embodiment, the indication information includes a first indication identifier and a second indication identifier, the second indication identifier indicates mapping type information, and the first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the first-type DMRS or a wireless resources of the DMRS port of the second-type DMRS.

In an embodiment, the DMRS port is used for CJT.

In an embodiment, the indication information sent from the access network device is received. The indication information includes a first indication identifier and a second indication identifier, the second indication identifier indicates mapping type information, and the first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the first-type DMRS. In this case, the DMRS port determined according to the preset relationship is the DMRS port of the first-type DMRS.

In an embodiment, the indication information sent from the access network device is received. The indication information includes a first indication identifier and mapping type information. The first indication identifier is configured to instruct the terminal to determine a first relationship from a preset relationship. The preset relationship includes a relationship between an indication identifier and a DMRS port, and each indication identifier corresponds to a DMRS port. The preset relationship at least includes a relationship between a first-type DMRS and a DMRS port, and a relationship between a second-type DMRS and a DMRS port. The first relationship indicates one or more DMRS ports. A numeric count of DMRS ports supported by the second-type DMRS is greater than a numeric count of DMRS ports supported by the first-type DMRS. The mapping type information indicates that a DMRS port indicated by the first indication identifier adopts a wireless resource of the DMRS port of the second-type DMRS. In this case, the DMRS port determined according to the preset relationship is the DMRS port of the second-type DMRS.

In these embodiments of the present invention, the indication information sent from the access network device is received. The indication information includes the first indication identifier and the mapping type information, and the first indication identifier is configured to instruct the terminal to determine the first relationship from the preset relationship. The preset relationship includes the relationship between the indication identifier and the DMRS port, and each indication identifier corresponds to the DMRS port. The preset relationship at least includes the relationship between the first-type DMRS and the DMRS port, and the relationship between the second-type DMRS and the DMRS port. The first relationship indicates one or more DMRS ports. The numeric count of DMRS ports supported by the second-type DMRS is greater than the numeric count of DMRS ports supported by the first-type DMRS. The mapping type information indicates that the DMRS port indicated by the first indication identifier adopts the wireless resource of the DMRS port of the first-type DMRS or the wireless resources of the DMRS port of the second-type DMRS. Since the preset relationship at least includes the relationship between the first-type DMRS and the DMRS port and the relationship between the second-type DMRS and the DMRS port, and the mapping type information indicates that the DMRS port indicated by the first indication identifier adopts the wireless resource of the DMRS port of the second-type DMRS, after the terminal receives the indication information, the terminal can determine whether the DMRS port is the DMRS port of the first-type DMRS or the DMRS port of the second-type DMRS according to the preset relationship.

In addition, in these embodiments of the present invention, on the one hand, the corresponding relationship between the indication value and the DMRS port of the first-type DMRS can be partially reused to reduce design complexity. On the other hand, it can better support switching from the first-type DMRS to the second-type DMRS, and can indicate an appropriate DMRS mapping method to the UE according to channel conditions in practice.

It should be noted that those skilled in the art can understand that the methods provided in the embodiments of the present invention can be executed alone or together with some methods in the embodiments of the present invention or some methods in related technologies.

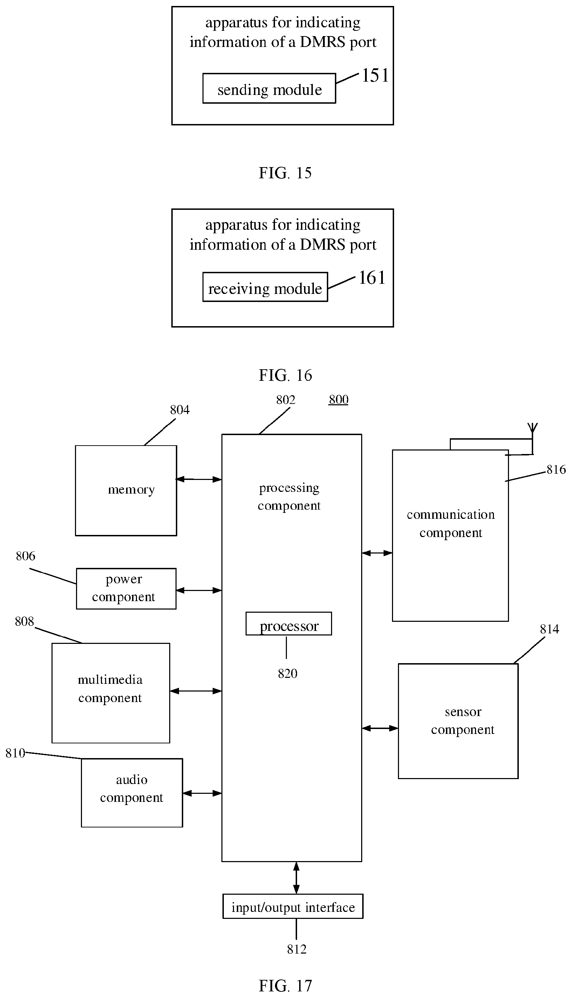

As shown in FIG. 15, an apparatus for indicating information of a DMRS port is provided in embodiments. The apparatus includes a sending module configured to send indication information to a terminal. The indication information indicates information of a DMRS port of a second-type DMRS.

It should be noted that those skilled in the art can understand that the methods provided in the embodiments of the present invention can be executed alone or together with some methods in the embodiments of the present invention or some methods in related technologies.

As shown in FIG. 16, an apparatus for indicating information of a DMRS port is provided in embodiments. The apparatus includes a receiving module configured to receive indication information sent from an access network device. The indication information indicates information of a DMRS port of a second-type DMRS.

It should be noted that those skilled in the art can understand that the methods provided in the embodiments of the present invention can be executed alone or together with some methods in the embodiments of the present invention or some methods in related technologies.

Embodiments of the present invention provide a communication device, including: a processor; and a memory for storing processor-executable instructions. The processor is configured to run the executable instructions to perform the method according to any embodiment of the present invention.

The processor may include various types of storage media, which are non-transitory computer storage media, and can continue to memorize and store information thereon after the communication device is powered off.

The processor may be connected to the memory through a bus to read the executable program stored on the memory.

Embodiments of the present invention further provide a computer storage medium. The computer storage medium stores a computer executable program. When the executable program is executed by a processor, the method of any embodiment of the present invention is implemented.

Regarding the apparatus in the above embodiments, the specific modes in which each module performs operation(s) has been described in detail in the embodiments related to the method, and will not be described in detail here.

As shown in FIG. 17, the present invention provides a structure of a terminal.

FIG. 17 shows a terminal 800 according to an illustrative embodiment. For example, the terminal may be a mobile phone, a computer, a digital broadcast terminal, a messaging device, a game console, a tablet device, a medical device, a fitness device, or a personal digital assistant.

Referring to FIG. 17, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 may access a wireless network based on a communication standard, such as Wi-Fi, 4G, or 5G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In an illustrative embodiment, the terminal 800 may be implemented with one or more of an application specific integrated circuits (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 804, executable by the processor 820 in the terminal 800, for completing the above-mentioned method. For example, the non-transitory computer-readable storage medium may be a ROM, a random access memory (RAM), a CD-ROM, a magnetic tape, a floppy disc, an optical data storage device, and the like.

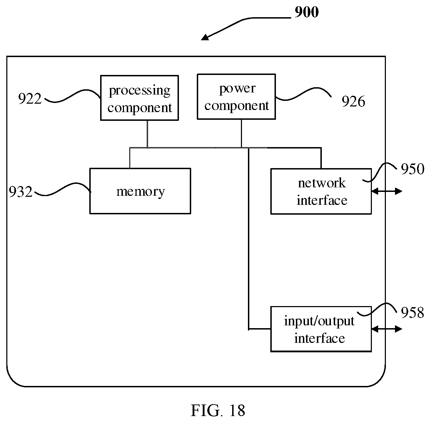

As shown in FIG. 18, embodiments of the present invention provide a structure of a base station. For example, the base station 900 may be provided as a network device. Referring to FIG. 18, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any method applied to the base station as described above.

The base station 900 may further include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS XTM, UnixTM, LinuxTM, FreeBSDTM, or the like.

In order to better understand the embodiments of the present invention, the technical solution of the present invention is described below via an example.

### Example 1

In an embodiment, the UE receives enhanced DMRS port indication information from a network device.

In an embodiment, a corresponding relationship between a value of an indication field and a DMRS port in the related technology is fully reused in mode 1 or mode 2.

### Mode 1: introducing an offset indication

In an embodiment, it refers to FIG. 3, for DMRS etype 1, port(s) indicated by an antenna indication field may be one or more ports 0, 1, 2, and 3. In order to indicate ports 4, 5, 6, and 7, an offset is added to the number of the port indicated by the antenna field. For example, if the value of the indication field is 10, indicated ports are ports {0, 1, 2, 3}. If the offset is 2, the actual ports are ports {2, 3, 4, 5}.

### Mode 2: introducing two offsets

In an embodiment, individual offset values of two indicated CDM groups are introduced. For example, if the ports indicated to the UE are ports {0, 1, 3}, offset1 for CDM group 1 is 0, and offset2 for CDM group 2 is 1, then final ports are ports {0, 1, 4}. Without introducing two offsets, such a combination cannot be indicated by reusing the table.

In an embodiment, the corresponding relationship between the value of the indication field and the DMRS port in the related art is partially reused.

In an embodiment, the table (such as Table 1) of the related protocol is extended, and a part is added after the table of the related protocol. For example, for the table of type 1 single symbol, the extension is performed as shown in Table 3.

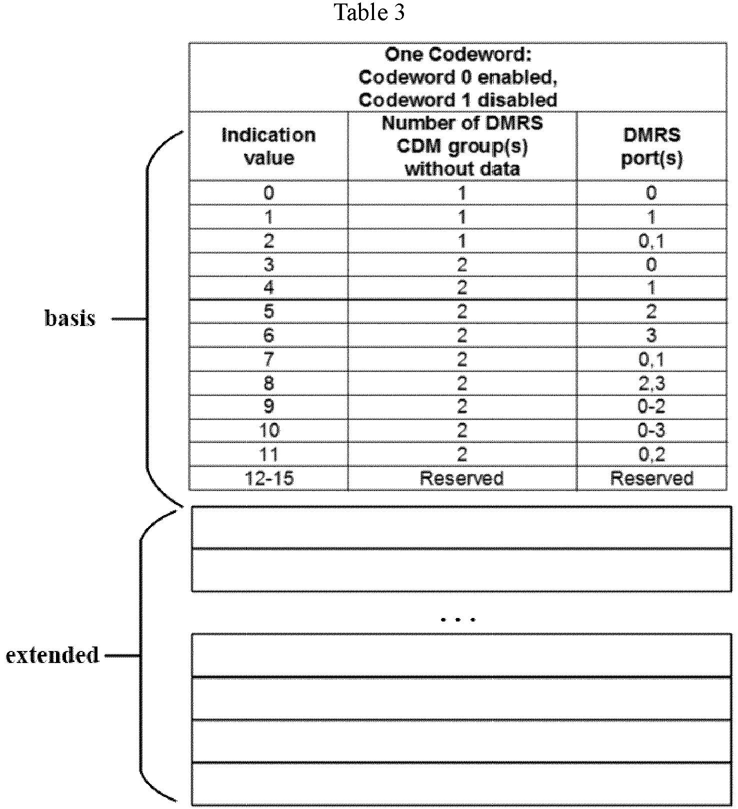

It is understandable that each element in Table 3 exists independently. These elements are listed in the same table as an example, but it does not mean that all elements in the table must exist simultaneously as shown in this table. A value of an element is independent of a value of any other element in Table 3. Therefore, it can be understood by those skilled in the art that the value of each element in Table 3 is an independent example. In addition, any combination of a row, a column, or multiple element values of the table can be used as an independent example.

In an embodiment, the antenna indication field is extended to support indicating a larger value. For the case where the value of the antenna indication field is greater than 11, the UE can identify the mapping type as etype 1. However, when the value of the antenna indication field is 0 to 11, additional information is required to inform the UE what mapping type is used.

In an embodiment, the indication information may be indicated via a high-layer signaling or DCI.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the scope of the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the scope of the appended claims.

## Claims

1. A method for indicating information of a demodulation reference signal (DMRS) port, performed by an access network device, comprising:
sending indication information to a terminal;
wherein the indication information indicates information of a DMRS port of a second-type DMRS.

2. The method according to claim 1, wherein the indication information comprises first indication information and second indication information; the first indication information comprises a first indication identifier; the second indication information comprises a second indication identifier; wherein the first indication identifier indicates a first relationship of a preset corresponding relationship, and the second indication identifier indicates the DMRS port of the second-type DMRS determined by the first relationship; the first relationship is one item of the preset corresponding relationship; the preset relationship comprises a relationship between an indication identifier and a DMRS port, and each indication identifier corresponds to a DMRS port; a numeric count of DMRS ports supported by the second-type DMRS is greater than a numeric count of DMRS ports supported by a first-type DMRS.

3. The method according to claim 2, wherein the second indication identifier indicates an offset, and the offset is configured to instruct the terminal to determine the information of the DMRS port of the second-type DMRS according to the DMRS port in the first relationship corresponding to the first indication identifier and the offset.

4. The method according to claim 3, wherein the first relationship indicates one or more DMRS ports of the first-type DMRS; the second indication identifier is the offset, and the offset is configured to instruct the terminal to determine the DMRS port of the second-type DMRS according to the DMRS port in the first relationship corresponding to the first indication identifier and the offset.

5. The method according to claim 4, wherein the offset is determined according to a code division multiplexing (CDM) group of a DMRS port of the first-type DMRS.

6. The method according to claim 3, wherein the first relationship indicates one or more DMRS ports; wherein
the second indication identifier is a first offset, and the first offset is configured to instruct the terminal to determine the DMRS port of the second-type DMRS according to the DMRS port in the first relationship corresponding to the first indication identifier and the first offset;
and/or
the second indication identifier is a second offset, and the second offset is configured to instruct the terminal to determine the DMRS port of the second-type DMRS according to the DMRS port in the first relationship corresponding to the first indication identifier and the second offset.

7. The method according to any one of claims 2 to 6, wherein the first indication information and the second indication information are carried in the same signaling, and the signaling comprises the first indication identifier and the second indication identifier.

8. The method according to any one of claims 2 to 6, wherein the first indication information and the second indication information are carried in different signalings, and the first indication identifier and the second indication identifier are carried by different signalings.

9. The method according to claim 1, wherein a first relationship indicates one or more DMRS ports;
the indication information comprises a first indication identifier; the first indication identifier is configured to instruct the terminal to determine the first relationship from a preset relationship; wherein the preset relationship comprises a relationship between an indication identifier and a DMRS port, and each indication identifier corresponds to a DMRS port; the preset relationship at least comprises a relationship between a first-type DMRS and a DMRS port, and a relationship between a second-type DMRS and a DMRS port; a numeric count of DMRS ports supported by the second-type DMRS is greater than a numeric count of DMRS ports supported by the first-type DMRS.

10. The method according to claim 9, wherein the indication information comprises the first indication identifier and a second indication identifier, the second indication identifier indicates mapping type information; the mapping type information indicates that a DMRS port indicated by the first indication identifier adopts a wireless resource of the DMRS port of the first-type DMRS or a wireless resource of the DMRS port of the second-type DMRS.

11. A method for indicating information of a demodulation reference signal (DMRS) port, performed by a terminal, comprising:
receiving indication information sent from an access network device;
wherein the indication information indicates information of a DMRS port of a second-type DMRS.

12. The method according to claim 11, wherein the indication information comprises first indication information and second indication information; the first indication information comprises a first indication identifier; the second indication information comprises a second indication identifier; wherein the first indication identifier indicates a first relationship of a preset corresponding relationship, and the second indication identifier indicates the DMRS port of the second-type DMRS determined by the first relationship; the first relationship is one item of the preset corresponding relationship; the preset relationship comprises a relationship between an indication identifier and a DMRS port, and each indication identifier corresponds to a DMRS port; a numeric count of DMRS ports supported by the second-type DMRS is greater than a numeric count of DMRS ports supported by a first-type DMRS.

13. The method according to claim 12, wherein the second indication identifier indicates an offset, and the offset is configured to instruct the terminal to determine the information of the DMRS port of the second-type DMRS according to the DMRS port in the first relationship corresponding to the first indication identifier and the offset.

14. The method according to claim 13, wherein the first relationship indicates one or more DMRS ports of the first-type DMRS; the second indication identifier is the offset, and the offset is configured to instruct the terminal to determine the DMRS port of the second-type DMRS according to the DMRS port in the first relationship corresponding to the first indication identifier and the offset.

15. The method according to claim 14, wherein the offset is determined according to a code division multiplexing (CDM) group of a DMRS port of the first-type DMRS.

16. The method according to claim 13, wherein the first relationship indicates one or more DMRS ports; wherein
the second indication identifier is a first offset, and the first offset is configured to instruct the terminal to determine the DMRS port of the second-type DMRS according to the DMRS port in the first relationship corresponding to the first indication identifier and the first offset;
and/or
the second indication identifier is a second offset, and the second offset is configured to instruct the terminal to determine the DMRS port of the second-type DMRS according to the DMRS port in the first relationship corresponding to the first indication identifier and the second offset.

17. The method according to any one of claims 12 to 16, wherein the first indication information and the second indication information are carried in the same signaling, and the signaling comprises the first indication identifier and the second indication identifier.

18. The method according to any one of claims 12 to 16, wherein the first indication information and the second indication information are carried in different signalings, and the first indication identifier and the second indication identifier are carried by different signalings.

19. The method according to claim 11, wherein a first relationship indicates one or more DMRS ports;
the indication information comprises a first indication identifier; the first indication identifier is configured to instruct the terminal to determine the first relationship from a preset relationship; wherein the preset relationship comprises a relationship between an indication identifier and a DMRS port, and each indication identifier corresponds to a DMRS port; the preset relationship at least comprises a relationship between a first-type DMRS and a DMRS port, and a relationship between a second-type DMRS and a DMRS port; a numeric count of DMRS ports supported by the second-type DMRS is greater than a numeric count of DMRS ports supported by the first-type DMRS.

20. The method according to claim 19, wherein the indication information comprises the first indication identifier and a second indication identifier, the second indication identifier indicates mapping type information; the mapping type information indicates that a DMRS port indicated by the first indication identifier adopts a wireless resource of the DMRS port of the first-type DMRS or a wireless resource of the DMRS port of the second-type DMRS.

21. An apparatus for indicating information of a demodulation reference signal (DMRS) port, comprising:
a sending module configured to send indication information to a terminal;
wherein the indication information indicates information of a DMRS port of a second-type DMRS.

22. An apparatus for indicating information of a demodulation reference signal (DMRS) port, comprising:
a receiving module configured to receive indication information sent from an access network device;
wherein the indication information indicates information of a DMRS port of a second-type DMRS.

23. A communication device, comprising:
an antenna;
a memory; and
a processor coupled to the antenna and the memory, wherein the processor is configured to execute computer-executable instructions stored in the memory to control transmission and reception of the antenna, and to implement the method according to any one of claims 1 to 10 or claims 11 to 20.

24. A computer storage medium having stored therein a computer-executable program that, when executed by a processor, causes the method according to any one of claims 1 to 10 or claims 11 to 20 to be implemented.
